# EUROPÄISCHE PATENTSCHRIFT

(11) **EP 2 145 384 B1**
(45) Veröffentlichungstag und Bekanntmachung des Hinweises auf die Patenterteilung: **04.05.2011**
(21) Anmeldenummer: 08735364.5
(22) Anmeldetag: 23.04.2008
(51) Int. Cl.: H02P 29/02, H02P 7/298, H02P 1/18

(54) **ELEKTRISCHER ANTRIEB**
ELECTRIC DRIVE
ENTRAÎNEMENT ÉLECTRIQUE

(30) Priorität: 09.05.2007 DE 102007021632
(43) Veröffentlichungstag der Anmeldung: 20.01.2010
(73) Patentinhaber: SSB Wind Systems GmbH & Co. KG, 48499 Salzbergen (DE)
(72) Erfinder: KESTERMANN, Hermann, 48432 Rheine (DE); UPSING, Josef, 48432 Rheine (DE)
(74) Vertreter: Bossmeyer, Jörg Peter
(86) Internationale Anmeldenummer: PCT/EP2008/003237
(87) Internationale Veröffentlichungsnummer: WO 2008/138454

(56) Entgegenhaltungen:
- EP-A1- 0 771 065
- EP-A1- 1 670 134
- DE-A1- 3 620 499
- DE-A1- 10 253 811

## Beschreibung

Die Erfindung betrifft einen elektrischen Antrieb mit wenigstens einem Elektromotor, dem mittels eines Stromrichters ein elektrischer Motorstrom zugeführt wird oder werden kann, einem Stromregler, mittels welchem unter Einwirkung auf den Stromrichter der Motorstrom in Abhängigkeit von einem Stromsollwertsignal geregelt wird oder werden kann, und einem mit dem Stromregler gekoppelten Stromsollwertgeber, mittels welchem ein Führungssignal für den Stromregler erzeugt wird oder werden kann. Ferner betrifft die Erfindung eine Windkraftanlage mit einem solchen Antrieb, eine Verwendung eines solchen Antriebs sowie ein Verfahren zum Verstellen der Position wenigstens eines Rotorblatts einer Windkraftanlage.

In Windkraftanlagen werden zur Regelung der Rotorblattposition Antriebe mit Umrichtern als Pitchantriebssysteme eingesetzt. Um die maximale Belastbarkeit der Umrichter nicht zu überschreiten, wird der aktuelle Strom überwacht. Die zulässige Stromgrenze der Umrichter ist derart gestaltet, dass für eine definierte Zeit ein dynamischer Spitzenstrom zugelassen wird, anschließend wird auf den Gerätenennstrom reduziert. Bekannt ist, dass der dynamisch zulässige Strom dem doppelten Gerätenennstrom entspricht. Im Bereich der Antriebstechnik sind z.B. der 1,5-fache bis 2-fache Gerätenennstrom übliche Werte für den dynamischen Strom.

Die für die Gleichstromantriebe hauptsächlich eingesetzten Umrichter sind 4-Quadranten-Stromrichter mit antiparallelen B6-Thyristorbrücken, wobei der dynamische Strom im Umrichter typischerweise für 6 Sekunden zur Verfügung steht. Eine Zeitdauer von 6 Sekunden bei doppeltem Gerätenennstrom wird aber nur ohne jegliche Vorbelastung des Umrichters erreicht. Anschließend wird auf den eingestellten Dauerstrom bzw. Nennstrom reduziert.

Der Wert des dynamischen Stroms und dessen Zeitdauer sind fest vorgegeben, wobei die Überwachung des Stroms mittels einer Überwachungsschaltung erfolgt. Bei bestimmten Vorbelastungen kann es dazu kommen, dass der Umrichter nur noch den Gerätenennstrom zulässt. Dies kann je nach Lastmoment dazu führen, dass der geforderte Drehzahlwert nicht erreicht wird, was bis zum Stillstand des Antriebs führen kann. Besonders bei Schwergängigkeiten kann es somit zu einem Festsetzen des Antriebs mit einer Fehlerabschaltung durch die übergeordnete Fehlerüberüberwachung kommen.

Ausgehend von diesem Stand der Technik liegt der Erfindung die Aufgabe zugrunde, einen elektrischen Antrieb der eingangs genannten Art derart weiterzubilden, dass dieser bei vergleichsweise hohen Strömen länger betrieben werden kann.

Diese Aufgabe wird erfindungsgemäß mit einem elektrischen Antrieb nach Anspruch 1, mit einer Windkraftanlage nach Anspruch 8, mit einer Verwendung nach Anspruch 9 und mit einem Verfahren nach Anspruch 10 gelöst. Bevorzugte Weiterbildungen sind in den Unteransprüchen gegeben.

Der erfindungsgemäße elektrische Antrieb, insbesondere zum Verstellen der Position wenigstens eines Rotorblatts einer Windkraftanlage, weist wenigstens einen Elektromotor, dem mittels eines Stromrichters ein elektrischer Motorstrom zugeführt wird oder werden kann, einen Stromregler, mittels welchem unter Einwirkung auf den Stromrichter der Motorstrom in Abhängigkeit von einem Stromsollwertsignal geregelt wird oder werden kann, und einen mit dem Stromregler gekoppelten Stromsollwertgeber auf, mittels welchem ein Führungssignal für den Stromregler erzeugt wird oder werden kann. Der Stromsollwertgeber ist mit dem Stromregler unter Zwischenschaltung einer Zusatzschaltung gekoppelt, wobei mittels der Zusatzschaltung in einer ersten Betriebsart das Führungssignal oder ein dem Führungssignal entsprechendes Signal dem Stromregler als das Stromsollwertsignal zugeführt wird oder werden kann, und wobei mittels der Zusatzschaltung in einer zweiten Betriebsart ein gepulstes Signal erzeugt und dieses dem Stromregler als das Stromsollwertsignal zugeführt wird oder werden kann.

Dadurch, dass mittels der Zusatzschaltung ein gepulstes Signal erzeugt und als Stromsollwertsignal dem Stromregler zugeführt wird oder werden kann, ist es möglich, den Elektromotor in der zweiten Betriebsart mit Stromimpulsen zu versorgen. Dies führt dazu, dass der Effektivwert des den Stromrichter durchfließenden Stroms reduziert wird, für die Dauer jedes Impulses aber dennoch ein großes Moment von dem Elektromotor abgegeben werden kann. Somit kann der Stromrichter im gepulsten Betrieb länger mit einem hohen Strom (in Form von Impulsen) betrieben werden als im ungepulsten Betrieb. Insbesondere können Schwergängigkeiten durch einen über eine gewisse Zeit andauernden gepulsten Betrieb einfacher überwunden werden, als mit einem kontinuierlich (ungepulst) wirkenden Moment, das nur für eine relativ kurze Zeit zur Verfügung steht. Die Signalhöhe der Impulse ist dabei bevorzugt so groß, dass während der Impulse durch den Stromrichter der 1,5-fache bis 2-fache Nennstrom fließt. Zwischen den Impulsen ist die Signalhöhe des gepulsten Signals niedriger, so dass zwischen den Impulsen z.B. der Nennstrom oder ein geringerer Strom durch den Stromrichter fließt. Unter Nennstrom ist dabei insbesondere der Nennstrom des Stromrichters zu verstehen. Die genauen Werte für die Signalhöhen des gepulsten Signals während der Impulse und zwischen den Impulsen sind aber bevorzugt einstellbar. Insbesondere ist auch die zeitliche Dauer der Impulse und/oder die zeitliche Dauer zwischen den Impulsen einstellbar. Bevorzugt sind diese zeitlichen Dauern derart bemessen, dass die Schnelligkeit der Stromregelung ausreicht, dem gepulsten Signal zu folgen.

Das gepulste Signal kann z.B. ein Rechtecksignal oder ein sägezahnförmiges Signal oder ein sinusförmiges Signal etc. sein. Bevorzugt handelt es sich bei dem gepulsten Signal um ein periodisches Signal, dessen Frequenz insbesondere einstellbar ist.

Das dem Führungssignal entsprechende Signal wird bevorzugt mittels der Zusatzschaltung erzeugt oder kann mittels dieser erzeugt werden, so dass z.B. mittels der Zusatzschaltung das Stromsollwertsignal sowohl in der ersten Betriebsart als auch in der zweiten Betriebsart erzeugt wird oder werden kann. In der ersten Betriebsart wird das Stromsollwertsignal bevorzugt als Kopie des Führungssignals erzeugt, in der zweiten Betriebsart wird das Stromsollwertsignal bevorzugt als das gepulste Signal erzeugt.

Gemäß einer Weiterbildung bilden die Impulse des gepulsten Signals wenigstens zwei in einem zeitlichen Abstand aufeinanderfolgende Impulsgruppen, der größer als der zeitliche Abstand zwischen zwei aufeinanderfolgenden Impulsen derselben Impulsgruppe ist. Auch hierdurch ist es möglich, einer Überlastung des Stromrichters entgegenzuwirken, da zwischen aufeinanderfolgenden Impulsgruppen ein impulsfreier Zeitraum liegt. In diesem impulsfreien Zeitraum weist das Stromsollwertsignal bevorzugt eine derartige Signalhöhe auf, dass durch den Stromrichter der Nennstrom fließt.

Ferner kann mittels der Zusatzschaltung die Temperatur des Stromrichters überwacht werden. Hierzu ist die Zusatzschaltung bevorzugt mit einem Temperaturfühler gekoppelt, mittels welchem die Temperatur des Stromrichters gemessen wird oder werden kann, wobei mittels der Zusatzschaltung die Signalhöhe der Impulse des gepulsten Signals variiert, insbesondere reduziert wird oder werden kann, wenn die gemessene Temperatur einen vorgegebenen maximalen Temperaturwert erreicht oder überschreitet. Auch diese Maßnahme dient dazu, den Stromrichter vor einer Überlastung zu schützen. Dabei kann die Temperaturmessung unmittelbar an dem Stromrichter oder mittelbar an einem Körper, wie z.B. einem Kühlkörper, erfolgen, der thermisch mit dem Stromrichter gekoppelt ist.

Bevorzugt kann die Zusatzschaltung das Führungssignal in der ersten Betriebsart überwachen, so dass die Zusatzschaltung in die zweite Betriebsart schaltet oder schalten kann, wenn das Führungssignal oder dessen Betrag für eine vorgegebene Zeitdauer größer oder gleich einem vorgegebenen Maximalwert ist. Insbesondere kann die Zusatzschaltung das Führungssignal auch in der zweiten Betriebsart überwachen, so dass die Zusatzschaltung in die erste Betriebsart schaltet oder schalten kann, wenn das Führungssignal oder dessen Betrag einen vorgegebenen Schwellenwert unterschreitet, der insbesondere kleiner oder gleich dem Maximalwert ist.

Der Stromsollwertgeber ist bevorzugt Teil eines Drehzahlreglers oder bildet diesen, mittels welchem die Motordrehzahl, insbesondere in der ersten Betriebsart, geregelt wird oder werden kann. Bevorzugt bildet der Stromsollwertgeber eine Drehzahlkorrektureinrichtung des Drehzahlreglers (alternativ kann die Drehzahlkorrektureinrichtung aber auch als Drehzahlregler bezeichnet werden). Dabei ist das Führungssignal abhängig von einer Abweichung zwischen einer Solldrehzahl des Elektromotors und einer Istdrehzahl des Elektromotors. Insbesondere wird das Führungssignal in Abhängigkeit von einer Abweichung zwischen der Solldrehzahl und der Istdrehzahl erzeugt. Der elektrische Antrieb weist somit bevorzugt eine Drehzahlregelung mit nachgeschalteter oder unterlagerter Stromregelung auf. Die Führungsgröße der Stromregelung wird dabei von dem Drehzahlregler bzw. von dessen Drehzahlkorrektureinrichtung geliefert. Somit ist es auf einfache Weise möglich, die Erfindung in einen bereits bestehenden elektrischen Antrieb zu integrieren, indem die Verbindung zwischen der Drehzahlkorrektureinrichtung bzw. dem Drehzahlregler und dem Stromregler aufgetrennt und die Zusatzschaltung zwischengeschaltet wird.

Bei dem Elektromotor handelt es sich bevorzugt um eine Gleichstrommaschine, die insbesondere als Reihenschlussmaschine betrieben und/oder geschaltet wird bzw. ist.

Der Stromregler kann zum Regeln des Motorstroms auf den Stromrichter einwirken oder wirkt zum Regeln des Motorstroms auf den Stromrichter ein. Bevorzugt handelt es sich daher bei dem Stromrichter um einen steuerbaren Stromrichter, der insbesondere mittels des Stromreglers gesteuert oder geregelt wird oder werden kann. Bevorzugt umfasst der Stromrichter einen oder mehrere Thyristoren, auf dessen oder deren Gate-Anschlüsse der Stromregler mittelbar oder unmittelbar einwirkt oder einwirken kann.

Der Stromrichter wird insbesondere mit mehrphasigem Strom versorgt oder kann mit diesem versorgt werden, wobei der mehrphasige Strom bevorzugt ein zweiphasiger Strom oder Drehstrom ist. Insbesondere weist der Stromrichter wenigstens eine mehrphasige Thyristorbrücke auf, die mit dem mehrphasigem Strom beaufschlagt wird oder werden kann. Bevorzugt ist mehrphasige Thyristorbrücke eine 2-phasige oder eine 3-phasige Thyristorbrücke. Insbesondere weist der Stromrichter zwei antiparallel geschaltete B6-Thyristorbrücken auf, die mit Drehstrom versorgt werden oder werden können.

Der Stromregler und/oder der Stromsollwertgeber oder Drehzahlregler können digital ausgebildet sein. Bevorzugt ist der Stromregler aber ein analoger Regler, so dass auch das Führungssignal und/oder das Stromsollwertsignal bevorzugt analoge Signale sind. Ferner handelt es sich bei dem Stromsollwertgeber und/oder bei der Drehzahlkorrektureinrichtung bevorzugt um analoge Schaltungen. Insbesondere ist auch der Drehzahlregler ein analoger Regler. Dem gegenüber weist die Zusatzschaltung bevorzugt einen digitalen Prozessor auf. Damit der Prozessor die analogen Signale einlesen und verarbeiten bzw. auswerten kann, weist die Zusatzschaltung bevorzugt wenigstens einen Analog-Digital-Wandler, mittels welchem das Führungssignal eingelesen und digitalisiert werden kann, und wenigstens einen Digital-Analog-Wandler auf, mittels welchem das Stromsollwertsignal ausgegeben werden kann. Alternativ ist aber auch eine analoge Realisierung der Zusatzschaltung möglich.

Die Erfindung betrifft ferner eine Windkraftanlage mit einem Träger, einem an dem Träger um eine Rotorachse drehbar gelagerten Rotor, der eine Rotornabe und wenigstens ein an der Rotornabe befestigtes Rotorblatt aufweist, dessen Position relativ zu der Rotornabe mittels eines Verstellantriebs verstellt wird oder werden kann, wobei der Verstellantrieb wenigstens einen erfindungsgemäßen Antrieb aufweist, der gemäß allen genannten Ausgestaltungen weitergebildet sein kann.

Zur Verstellung seiner Position ist das Rotorblatt bevorzugt um eine Blattachse drehbar an der Rotornabe gelagert und kann mittels des Verstellantriebs um die Blattachse gedreht werden, die insbesondere schräg oder senkrecht zur Rotorachse verläuft.

Die Erfindung betrifft auch die Verwendung eines elektrischen Antriebs zum Verstellen der Position wenigstens eines Rotorblatts einer Windkraftanlage, wobei der elektrische Antrieb ein erfindungsgemäßer Antrieb ist, der gemäß allen genannten Ausgestaltungen weitergebildet sein kann.

Zusätzlich betrifft die Erfindung ein Verfahren zum Verstellen der Position wenigstens eines Rotorblatts einer Windkraftanlage mittels wenigstens eines Elektromotors, dem mittels eines Stromrichters ein elektrischer Motorstrom zugeführt wird, der in Abhängigkeit von einem Stromsollwertsignal geregelt wird, wobei ein Führungssignal erzeugt wird, dem in einer ersten Betriebsart das Stromsollwertsignal entspricht. Ferner wird ein gepulstes Signal erzeugt; dem in einer zweiten Betriebsart das Stromsollwertsignal entspricht, wenn das Führungssignal oder dessen Betrag für eine vorgegebene Zeitdauer einen vorgegebenen Maximalwert überschreitet.

Bevorzugt wird zur ersten Betriebsart zurückgekehrt, wenn das Führungssignal oder dessen Betrag einen vorgegeben Schwellenwert unterschreitet, der kleiner oder gleich dem Maximalwert ist.

Die Drehzahl des Elektromotors wird bevorzugt geregelt, insbesondere in der ersten Betriebsart. Dabei ist das Führungssignal bevorzugt abhängig von der Abweichung zwischen einer Solldrehzahl des Elektromotors und einer Istdrehzahl des Elektromotors. Insbesondere wird das Führungssignal in Abhängigkeit von der Abweichung zwischen der Solldrehzahl und der Istdrehzahl erzeugt.

Bevorzugt wird die Temperatur des Stromrichters gemessen, wobei die Signalhöhe der Impulse des gepulsten Signals variiert, insbesondere reduziert wird, wenn die gemessene Temperatur einen vorgegebenen maximalen Temperaturwert erreicht oder überschreitet.

Der Elektromotor ist insbesondere eine Gleichstrommaschine. Ferner wird dem Stromrichter bevorzugt ein mehrphasiger Strom, insbesondere ein zweiphasiger Strom oder Drehstrom zugeführt.

Die Erfindung wird nachfolgend anhand einer bevorzugten Ausführungsform unter Bezugnahme auf die Zeichnung beschrieben. In der Zeichnung zeigen:
- Fig. 1: eine schematische Seitenansicht einer Windkraftanlage mit einem elektrischen Antrieb gemäß einer Ausführungsform der Erfindung,
- Fig. 2: ein schematisches Blockschaltbild des Antriebs gemäß der Ausführungsform,
- Fig. 3: ein schematisches Blockschaltbild der Zusatzschaltung nach Fig. 2,
- Fig. 4: ein Flussdiagramm für die Zusatzschaltung nach Fig. 3 und
- Fig. 5: ein zeitlicher Verlauf des Ausgangssignals der Zusatzschaltung,
- Fig. 6: ein anderer zeitlicher Verlauf des Ausgangssignals der Zusatzschaltung und
- Fig. 7: ein Schaltplan des Stromrichters.

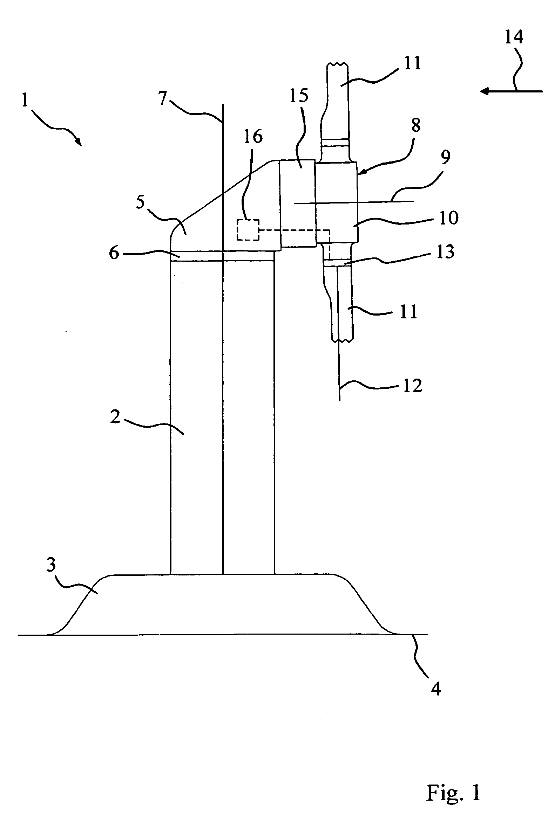

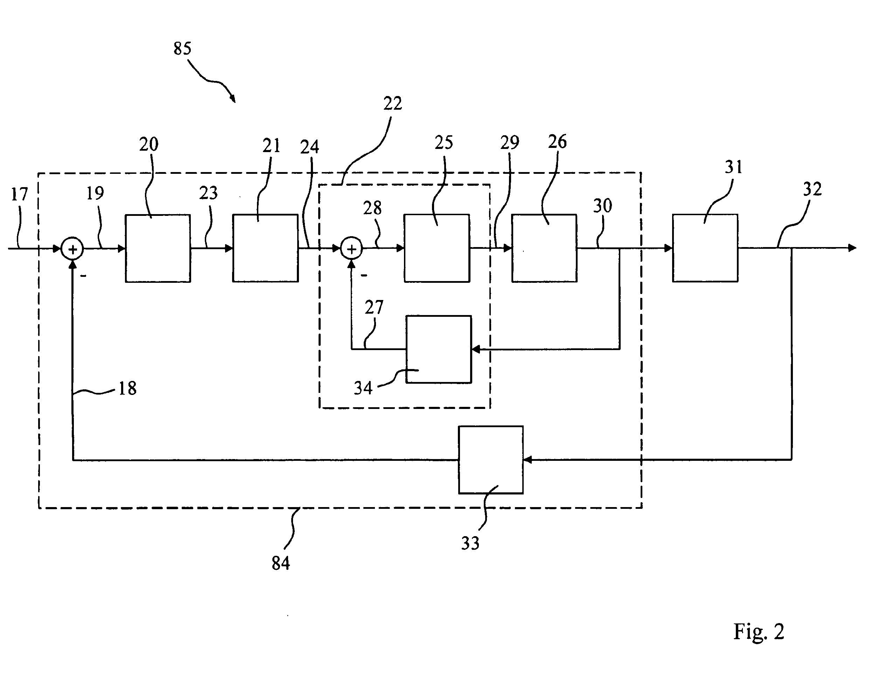

Aus Fig. 1 ist eine Seitenansicht einer Windkraftanlage 1 ersichtlich, die einen Turm 2 aufweist, der mittels eines Fundaments 3 im Erdboden 4 verankert ist. An seinem dem Fundament 3 abgewandten Ende ist an dem Turm 2 ein Maschinenträger 5 mittels eines Azimuthsystems 6 um eine Längsachse 7 des Turms 2 drehbar gelagert. An dem Maschinenträger 5 ist ein Rotor 8 um eine Rotorachse 9 drehbar gelagert, der eine Rotornabe 10 und mehrere Rotorblätter 11 aufweist, die jeweils um eine Blattachse 12 relativ zur Rotornabe 10 drehbar sind. Die Blattachsen 12 verlaufen senkrecht oder schräg zur Rotorachse 9, wobei jedes der Rotorblätter 11 um seine Blattachse 12 mittels eines Verstellantriebs 13 gedreht werden kann. Der Rotor 8 kann durch Wind 14 um die Rotorachse 9 gedreht werden und einen elektrischen Generator 15 antreiben. Ferner ist jeder der Verstellantriebe 13 mit einer Anlagensteuerung 16 elektrisch gekoppelt, welche die Verstellantriebe 13 zum Verdrehen der Rotorblätter 11 ansteuert oder ansteuern kann. Jeder der Verstellantriebe 13 weist einen elektrischen Antrieb 85 (siehe Fig. 2) gemäß einer Ausführungsform der Erfindung auf oder wird durch einen solchen Antrieb 85 gebildet.

Aus Fig. 2 ist ein schematisches Blockschaltbild von einem der elektrischen Antriebe 85 ersichtlich. Dem Antrieb 85 wird ein Drehzahlsollwertsignal 17 zugeführt, von dem ein Drehzahlistwertsignal 18 subtrahiert wird, wobei das Drehzahldifferenzsignal 19 einer Drehzahlkorrektureinrichtung 20 zugeführt wird. Die Drehzahlkorrektureinrichtung 20 ist unter Zwischenschaltung einer Zusatzschaltung 21 mit einem Stromregler 22 elektrisch verbunden, wobei die Drehzahlkorrektureinrichtung 20 in Abhängigkeit von dem Drehzahldifferenzsignal 19 ein Führungssignal 23 für den Stromregler 22 erzeugt und an die Zusatzschaltung 21 abgibt. Die Zusatzschaltung 21 gibt ein Stromsollwertsignal 24 an den Stromregler 22 ab.

Der Stromregler 22 weist eine Stromkorrektureinrichtung 25 auf, der ein steuerbarer Stromrichter 26 nachgeschaltet ist. Von dem Stromsollwertsignal 24 wird ein Stromistwertsignal 27 subtrahiert, wobei das Stromdifferenzsignal 28 der Stromkorrektureinrichtung 25 zugeführt wird. Die Stromkorrektureinrichtung 25 erzeugt in Abhängigkeit von dem Stromdifferenzsignal 28 ein Steuersignal 29 und gibt dieses an den Stromrichter 26 ab. Der Stromrichter 26 gibt in Abhängigkeit von dem Steuersignal 29 einen elektrischen Strom 30 an einen Elektromotor 31 ab, der hier als Gleichstrommaschine ausgebildet ist. Die Drehzahl 32 des Elektromotors 31 wird mittels einer Drehzahlmesseinrichtung 33 gemessen, die in Abhängigkeit von der Drehzahl 32 das Drehzahlistwertsignal 18 erzeugt und abgibt, welches die aktuelle Drehzahl 32 des Elektromotors 31 repräsentiert. Ferner wird der elektrische Strom 30 mittels einer Strommesseinrichtung 34 gemessen, die das Stromistwertsignal 27 erzeugt und abgibt, welches den aktuell durch den Elektromotor 31 fließenden elektrischen Strom (Motorstrom) 30 repräsentiert.

In Fig. 2 repräsentiert das Bezugszeichen 84 den Drehzahlregler. Alternativ könnte aber auch die Drehzahlkorrektureinrichtung 20 als Drehzahlregler bezeichnet werden. Ferner repräsentiert in Fig. 2 das Bezugszeichen 22 den Stromregler. Alternativ könnte aber auch die Stromkorrektureinrichtung 25 als Stromregler bezeichnet werden.

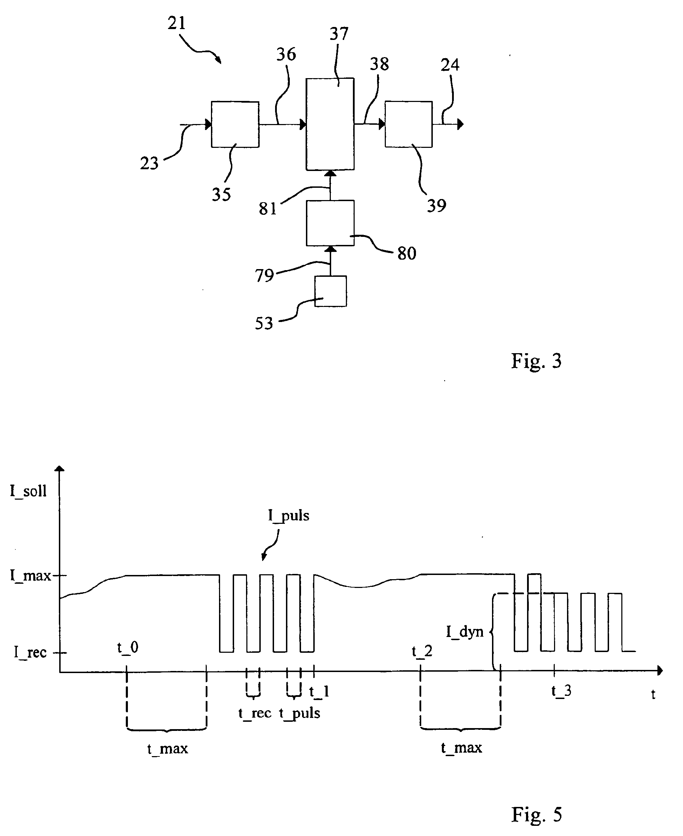

Aus Fig. 3 ist ein schematisches Blockschaltbild der Zusatzschaltung 21 ersichtlich, die einen Analog-Digital-Wandler 35 aufweist, der das analoge Führungssignal 23 in ein digitales Führungssignal 36 umwandelt. Das digitale Führungssignal 36 wird einem digitalen Prozessor 37 zugeführt, der das digitale Führungssignal 36 auswertet und in Abhängigkeit von der Auswertung ein digitales Stromsollwertsignal 38 erzeugt und abgibt. Das digitale Stromsollwertsignal 38 wird einem Digital-Analog-Wandler 39 zugeführt, der das digitale Stromsollwertsignal 38 in das analoge Stromsollwertsignal 24 umwandelt. Ferner ist ein Temperaturfühler 53 vorgesehen, der mit dem Stromrichter 26 thermisch gekoppelt ist. Das von dem Temperaturfühler 53 abgegebene Temperatursignal 79 repräsentiert die aktuelle Temperatur des Stromrichters 26 und wird einem Analog-Digital-Wandler 80 zugeführt, der das analoge Temperatursignal 79 in ein digitales Temperatursignal 81 umwandelt, welches dem Prozessor 37 zugeführt wird. Das digitale Temperatursignal 81 wird von dem Prozessor 37 ausgewertet und gegebenenfalls bei der Erzeugung des digitalen Stromsollwertsignals 38 berücksichtigt. Als Temperaturfühler 53 wird bevorzugt ein KTY-Sensor verwendet.

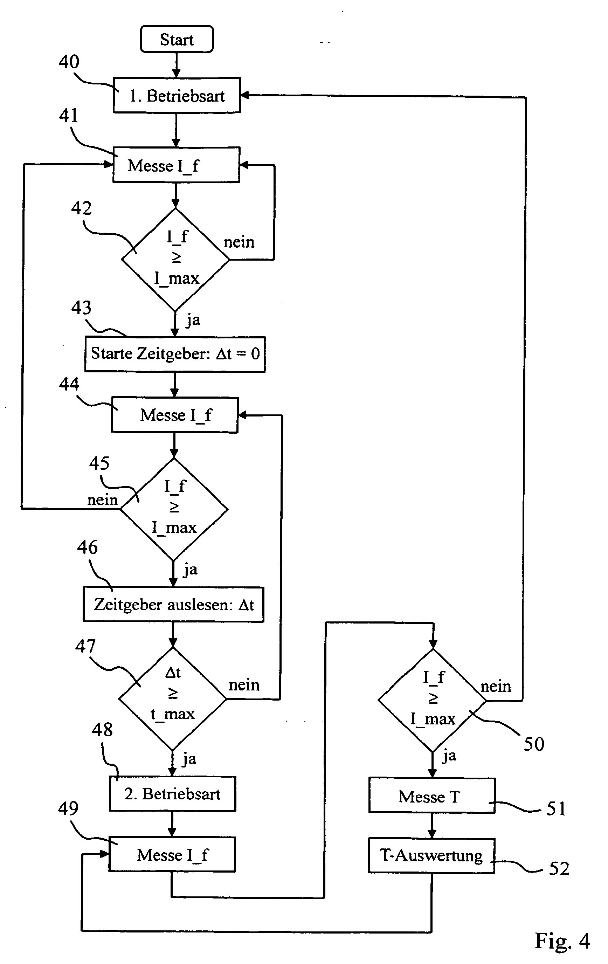

Der in der Zusatzschaltung 21 bzw. in dem Prozessor 37 ablaufende Prozess wird nachfolgend anhand des aus Fig. 4 ersichtlichen Flussdiagramms beschrieben. Dabei zeigt das Flussdiagramm lediglich eine von mehreren Realisierungsmöglichkeiten, so dass das Flussdiagramm gemäß Fig. 4 nicht einschränkend zu verstehen ist.

Zunächst wird in Schritt 40 die Zusatzschaltung 21 in eine erste Betriebsart gesetzt. In der ersten Betriebsart entspricht das Stromsollwertsignal (I_soll) 24 stets dem Führungssignal (I_f) 23, so die Übertragungsfunktion der Zusatzschaltung 21 gleich "1" oder zumindest näherungsweise gleich "1" ist. In diesem Fall bildet der elektrische Antrieb 85 einen Elektromotor 31 mit Drehzahlregler 84, dem der Stromregler 22 unterlagert ist.

In Schritt 41 wird das Führungssignal I_f abgefragt und in Schritt 42 geprüft, ob das Führungssignal I_f größer oder gleich einem vorgegebenen Maximalwert I_max ist. Ist dies nicht der Fall, so wird zu Schritt 41 zurückgekehrt. Verläuft die Prüfung in Schritt 42, positiv, so wird in Schritt 43 ein Zeitgeber gestartet. Der Zeitgeber liefert auf Anfrage diejenige Zeitdauer Δt, die zwischen dem Zeitpunkt des Starts des Zeitgebers und dem Zeitpunkt der Anfrage vergangen ist. Folglich gilt im Startzeitpunkt des Zeitgebers Δt = 0. Danach wird in Schritt 44 erneut das Führungssignal I_f abgefragt und in Schritt 45 geprüft, ob das Führungssignal I_f größer oder gleich dem Maximalwert I_max ist. Ist dies nicht der Fall, so wird zu Schritt 41 zurückgekehrt. Verläuft die Prüfung in Schritt 45 positiv, so wird in Schritt 46 der Zeitgeber abgefragt, wobei als Abfrageergebnis die seit dem Zeitpunkt des Starts des Zeitgebers in Schritt 43 bis zum Abfragezeitpunkt in Schritt 46 verstrichene Zeitdauer Δt geliefert wird.

In Schritt 47 wird geprüft, ob die abgefragte Zeitdauer Δt größer oder gleich einer Maximalzeit t_max ist. Falls nein, wird zu Schritt 44 zurückgekehrt. Falls die Prüfung in Schritt 47 positiv verläuft, so wird im Schritt 48 die Zusatzschaltung 21 in eine zweite Betriebsart gesetzt. In der zweiten Betriebsart wird von der Zusatzschaltung 21 ein gepulstes Signal I_puls (siehe Fig. 5) erzeugt und als das Stromsollwertsignal I_soll ausgegeben.

In Schritt 49 wird das Führungssignal I_f eingelesen und in Schritt 50 geprüft, ob das Führungssignal I_f größer oder gleich dem Maximalwert I_max ist. Falls dies nicht zutrifft, wird zu Schritt 40 zurückgekehrt und die Zusatzschaltung 21 wieder in die erste Betriebsart gesetzt. Trifft die Prüfung in Schritt 50 zu, wird in Schritt 51 die Temperatur T des Stromrichters 26 abgefragt. In Schritt 52 folgt dann eine Auswertung der abgefragten Temperatur T, wonach zu Schritt 49 zurückgekehrt wird.

Die Auswertung der abgefragten Temperatur T in Schritt 52 kann insbesondere eine Verringerung der Signalhöhe I_dyn (siehe Fig. 5) der Impulse des gepulsten Signals I_puls umfassen, wenn die abgefragte Temperatur T eine vorgegebene maximale Temperatur T_max erreicht oder überschreitet.

Aus Fig. 5 ist ein möglicher Verlauf des Stromsollwertsignals I_soll in Abhängigkeit von der Zeit t ersichtlich. Zunächst befindet sich die Zusatzschaltung 21 in der ersten Betriebsart, wobei das Stromsollwertsignal I_soll dem Führungssignal I_f entspricht. Das Stromsollwertsignal I_soll liegt zunächst unterhalb dem Maximalwert I_max, steigt jedoch mit zunehmender Zeit t an und erreicht bei t_0 den Maximalwert I_max. Da das Stromsollwertsignal I_soll für die vorgegebene Zeitdauer t_max den Maximalwert I_max nicht mehr unterschreitet, schaltet zum Zeitpunkt t_0 + t_max die Zusatzschaltung 21 in die zweite Betriebsart um. Nun wird das gepulste Signal I_puls erzeugt und als das Stromsollwertsignal I_soll abgegeben, bis bei t_1 das Führungssignal I_f wieder unter den Maximalwert I_max fällt. In Fig. 5 ist das gepulste Signal ein Rechtecksignal. Es sind aber auch andere Impulsformen möglich.

Die Signalhöhe I_dyn der Impulse des gepulsten Signals I_puls ist hier gleich I_max. Dies führt bevorzugt dazu, dass der den Stromrichter 26 durchfließende Strom während der Impulse dem doppelten Nennstrom des Stromrichters entspricht. Zwischen den Impulsen hat das gepulste Signal I_puls eine Signalhöhe I_rec, die bevorzugt so groß ist, dass der den Stromrichter 26 durchfließende Strom in der Zeit t_rec zwischen den Impulsen dem Nennstrom des Stromrichters 26 oder einem geringeren Strom entspricht. Die Zeit t_rec zwischen den Impulsen ist hier gleich der Impulsdauer t_puls, so dass das gepulste Signal I_puls bevorzugt ein Tastverhältnis von 0,5 aufweist. Ein typischer Wert für t_uls = t_rec ist z.B. 1s, wobei dieser Wert aber nicht einschränkend zu verstehen ist.

Die Zusatzschaltung 21 schaltet bei t_1 wieder in die erste Betriebsart, in der das Stromsollwertsignal I_soll dem Führungssignal I_f entspricht. Bei t_2 wird von dem Stromsollwertsignal I_soll aber erneut der Maximalwert I_max erreicht und für die Zeit t_2 + t_max gehalten, so dass in die zweite Betriebsart gewechselt wird und der Impulsbetrieb eintritt. Ferner wird zum Zeitpunkt t_3 festgestellt, dass die Temperatur T des Stromrichters 26 die vorgegebene maximale Temperatur T_max erreicht oder überschritten hat, sodass die Signalhöhe I_dyn der Impulse des gepulsten Signals I_puls auf einen Wert reduziert wird, der kleiner als I_max ist.

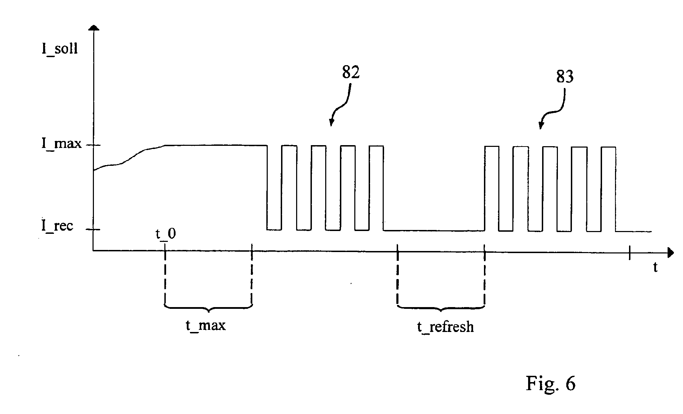

Aus Fig. 6 ist der zeitliche Verlauf des Stromsollwertsignals I_soll gemäß einer Abwandlung ersichtlich, wobei im gepulsten Betrieb (zweiten Betriebsart) ab t_0 + t_max zunächst eine Impulsgruppe 82 mit fünf Impulsen erzeugt und abgegeben wird. Danach folgt eine Ruhezeit t_refresh, in der kein Impuls abgegeben wird. Nach Ablauf der Ruhezeit t_refresh wird erneut eine Impulsgruppe 83 mit fünf Impulsen erzeugt und als Stromsollwertsignal I_soll abgegeben, wonach wieder eine Ruhezeit t_refresh folgt. Dieser Ablauf wird wiederholt, solange der gepulste Betrieb andauert. Die Anzahl der Impulse je Impulsgruppe ist dabei nicht auf fünf beschränkt sondern kann auch auf eine andere Zahl eingestellt werden. Ferner ist auch hier eine Reduzierung der Signalhöhe der Impulse möglich, wenn die Temperatur T des Stromrichters 26 die maximale Temperatur T_max erreicht oder überschreitet.

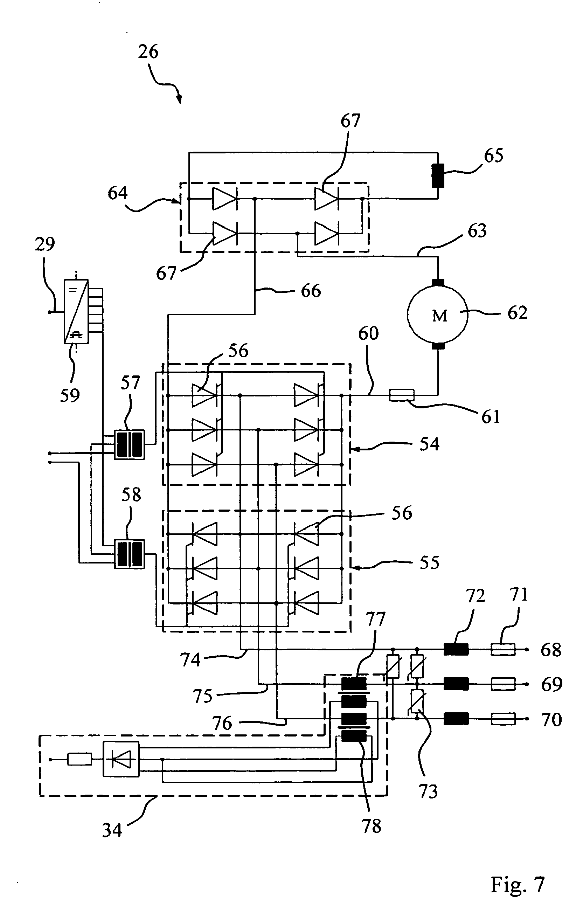

Aus Fig. 7 ist ein Schaltplan des Stromrichters 26 ersichtlich, der eine erste B6-Thyristorbrücke 54 und eine zweite B6-Thyristorbrücke 55 aufweist, wobei die beiden Thyristorbrücken 54 und 55 parallel geschaltet, aber entgegengesetzt zueinander ausgerichtet sind. Jede der Thyristorbrücken 54 und 55 weist sechs Thyristoren 56 auf, wobei die Gate-Anschlüsse der Thyristoren 56 der Thyristorbrücke 54 mit einem Zündübertrager 57 und die Gate-Anschlüsse der Thyristoren 56 der Thyristorbrücke 55 mit einem Zündübertrager 58 verbunden sind. Die Zündübertrager 57 und 58 sind mit einem Phasenanschnittbaustein 59 verbunden, dem als Eingangssignal das von der Stromkorrektureinrichtung 25 abgegebene Steuersignal 29 zugeführt wird, welches bevorzugt den jeweiligen Steuerwinkel repräsentiert.

Eine erste Ausgangsleitung 60 der Thyristorbrücken 54 und 55 ist unter Zwischenschaltung einer Sicherung 61 mit einer Seite der Rotorwicklung 62 des Elektromotors 31 verbunden. Ferner ist die andere Seite der Rotorwicklung 62 über eine Leitung 63 unter Zwischenschaltung einer Diodenanordnung 64 mit einer Seite der Statorwicklung 65 des Elektromotors 31. verbunden. Die zweite Ausgangsleitung 66 der Thyristorbrücken 54 und 55 ist unter Zwischenschaltung der Diodenanordnung 64 mit der anderen Seite der Statorwicklung 65 verbunden. Der Elektromotor 31 wird hier als Reihenschlussmaschine betrieben, wobei die vier Dioden 67 der Diodenanordnung 64 sicherstellen, dass die Statorwicklung 65 stets in derselben Richtung von Strom durchflossen wird. Somit ist es möglich, den Strom durch die Rotorwicklung 62 umzukehren, ohne dass sich der Strom durch die Statorwicklung 65 umkehrt. Somit kann eine Änderung des Drehsinns des Rotors bewirkt werden.

Die beiden Thyristorbrücken 54 und 55 werden über Anschlüsse 68, 69 und 70 sowie Leitungen 74, 75 und 76 mit den drei Phasen eines Drehstromnetzes verbunden, wobei je Phase eine Reihenschaltung aus einer Sicherung 71 und einer Drossel 72 in die zugehörige Leitung geschaltet ist. Ferner sind als Überspannungsschutz drei Varistoren 73 zwischen die Leitungen 74, 75 und 76 geschaltet.

In die Leitungen 75 und 76 sind Stromwandler 77 und 78 geschaltet, mittels welchen der die Thyristorbrücken 54 und 55 durchfließende Strom gemessen werden kann. Die beiden Stromübertrager 77 und 78 bilden somit den sensorischen Teil der Strommesseinrichtung 34. Der gemessene Strom repräsentiert dabei auch den Strom, der durch den Motor 31 fließt und ist somit für die Bildung des Stromistwertsignals 27 geeignet.

### Bezugszeichenliste

- 1: Windkraftanlage
- 2: Turm
- 3: Fundament
- 4: Erdboden
- 5: Maschinenträger
- 6: Azimutsystem
- 7: Längsachse des Turms
- 8: Rotor
- 9: Rotorachse
- 10: Rotornabe
- 11: Rotorblatt
- 12: Blattachse
- 13: Verstellantrieb
- 14: Wind
- 15: elektrischer Generator
- 16: Anlagensteuerung
- 17: Drehzahlsollwertsignal
- 18: Drehzahlistwertsignal
- 19: Drehzahldifferenzsignal
- 20: Drehzahlkorrektureinrichtung / Stromsollwertgeber
- 21: Zusatzschaltung
- 22: Stromregler
- 23: (analoges) Führungssignal
- 24: (analoges) Stromsollwertsignal
- 25: Stromkorrektureinrichtung
- 26: Stromrichter
- 27: Stromistwertsignal
- 28: Stromdifferenzsignal
- 29: Steuersignal
- 30: elektrischer Strom / Motorstrom
- 31: Elektromotor
- 32: Drehzahl des Elektromotors
- 33: Drehzahlmesseinrichtung
- 34: Strommesseinrichtung
- 35: Analog-Digital-Wandler
- 36: digitales Führungssignal
- 37: digitaler Prozessor
- 38: digitales Stromsollwertsignal
- 39: Digital-Analog-Wandler
- 40: Schritt: Setze Zusatzschaltung in erste Betriebsart
- 41: Schritt: Abfrage des Führungssignals
- 42: Schritt: Prüfe ob Führungssignal größer oder gleich Maximalwert
- 43: Schritt: Starte Zeitgeber
- 44: Schritt: Abfrage des Führungssignals
- 45: Schritt: Prüfe ob Führungssignal größer oder gleich Maximalwert
- 46: Schritt: Abfrage der Zeitdauer von Zeitgeber
- 47: Schritt: Prüfe ob abgefragte Zeitdauer größer oder gleich Maximalzeit
- 48: Schritt: Setze Zusatzschaltung in zweite Betriebsart
- 49: Schritt: Abfrage des Führungssignals
- 50: Schritt: Prüfe ob Führungssignal größer oder gleich Maximalwert
- 51: Schritt: Abfrage der Temperatur des Stromrichters
- 52: Schritt: Auswertung der abgefragten Temperatur
- 53: Temperaturfühler
- 54: B6-Thyristorbrücke
- 55: B6-Thyristorbrücke
- 56: Thyristor
- 57: Zündübertrager
- 58: Zündübertrager
- 59: Phasenanschnittbaustein
- 60: Leitung
- 61: Sicherung
- 62: Rotorwicklung des Elektromotors
- 63: Leitung
- 64: Diodenanordnung
- 65: Statorwicklung des Elektromotors
- 66: Leitung
- 67: Dioden
- 68: Anschluss
- 69: Anschluss
- 70: Anschluss
- 71: Sicherung
- 72: Drossel
- 73: Varistor
- 74: Leitung
- 75: Leitung
- 76: Leitung
- 77: Stromübertrager
- 78: Stromübertrager
- 79: (analoges) Temperatursignal
- 80: Analog-Digital-Wandler
- 81: digitales Temperatursignal
- 82: Impulsgruppe
- 83: Impulsgruppe
- 84: Drehzahlregler
- 85: elektrischer Antrieb

## Patentansprüche

1. Elektrischer Antrieb mit
wenigstens einem Elektromotor (31), dem mittels eines Stromrichters (26) ein elektrischer Motorstrom (30) zugeführt wird oder werden kann,
einem Stromregler (22), mittels welchem unter Einwirkung auf den Stromrichter (26) der Motorstrom (30) in Abhängigkeit von einem Stromsollwertsignal (24, I_soll) geregelt wird oder werden kann,
einem mit dem Stromregler (22) gekoppelten Stromsollwertgeber (20), mittels welchem ein Führungssignal (23, I_f) für den Stromregler (22) erzeugt wird oder werden kann, wobei
der Strotnsollwertgeber (20) mit dem Stromregler (22) unter Zwischenschaltung einer Zusatzschaltung (21) gekoppelt ist, mittels welcher
- in einer ersten Betriebsart das Führungssignal (23,I_f) oder ein dem Führungssignal entsprechendes Signal dem Stromregler (22) als das Stromsollwertsignal (24, T_soll) zugeführt wird oder werden kann,
- in einer zweiten Betriebsart ein gepulstes Signal (I_puls) erzeugt und dieses dem Stromregler (22) als das Stromsollwertsignal (24, I_Soll) zugeführt wird oder werden kann.

2. Elektrischer Antrieb nach Anspruch 1, **dadurch gekennzeichnet, dass** die Impulse des gepulsten Signals (I_puls) wenigstens zwei in einem zeitlichen Abstand (t_refresh) aufeinanderfolgende Impulsgruppen (82, 83) bilden, der größer als der zeitliche Abstand (t_rec) zwischen zwei aufeinanderfolgenden Impulsen derselben Impulsgruppe ist.

3. Elektrischer Antrieb nach Anspruch 1 oder 2, **dadurch gekennzeichnet, dass** die Zusatzschaltung (21) mit einem Temperaturfühler (53) gekoppelt ist, mittels welchem die Temperatur (T) des Stromrichters (26) gemessen wird oder werden kann, wobei mittels der Zusatzschaltung (21) die Signalhöhe (I_dyn) der Impulse des gepulsten Signals (I_puls) variiert wird oder werden kann, wenn die gemessene Temperatur (T) einen vorgegebenen maximalen Temperaturwert (T_max) erreicht oder überschreitet.

4. Elektrischer Antrieb nach einem der vorangehenden Ansprüche, **dadurch gekennzeichnet, dass** die Zusatzschaltung (21) in die zweite Betriebsart schaltet oder schalten kann, wenn das Führungssignal (23, I_f) oder dessen Betrag für eine vorgegebene Zeitdauer (t_max) größer oder gleich einem vorgegebenen Maximalwert (I_max) ist.

5. Elektrischer Antrieb nach Anspruch 4, **dadurch gekennzeichnet, dass** die Zusatzschaltung (21) in die erste Betriebsart schaltet oder schalten kann, wenn das Führungssignal (23, I_f) oder dessen Betrag einen vorgegebenen Schwellenwert unterschreitet, der kleiner oder gleich dem Maximalwert ist.

6. Elektrischer Antrieb nach einem der vorangehenden Ansprüche, **dadurch gekennzeichnet, dass** der Stromsollwertgeber (20) Teil eines Drehzahlreglers ist oder diesen bildet, mittels welchem in der ersten Betriebsart die Drehzahl des Elektromotors geregelt wird oder werden kann, wobei das Führungssignal (23, I_f) abhängig von einer Abweichung zwischen einer Solldrehzahl des Elektromotors (31) und einer Istdrehzahl des Elektromotors (31) ist.

7. Elektrischer Antrieb nach einem der vorangehenden Ansprüche, **dadurch gekennzeichnet, dass** der Elektromotor (31) eine Gleichstrommaschine ist und der Stromrichter (26) wenigstens eine mehrphasige Thyristorbrücke (54) aufweist, die eingangsseitig mit einem mehrphasigen Strom versorgt wird oder werden kann.

8. Windkraftanlage mit
einem Träger (5),
einem an dem Träger (5) um eine Rotorachse (9) drehbar gelagerten Rotor (8), der eine Rotornabe (10) und wenigstens ein an der Rotornabe (10) befestigtes Rotorblatt (11) aufweist, dessen Position relativ zu der Rotornabe (10) mittels eines Verstellantriebs (13) verstellt wird oder werden kann,
**dadurch gekennzeichnet, dass**
der Verstellantrieb (13) wenigstens einen elektrischen Antrieb (85) nach einem der vorangehenden Ansprüche aufweist.

9. Verwendung eines elektrischen Antriebs nach einem der Ansprüche 1 bis 7 zum Verstellen der Position wenigstens eines Rotorblatts (11) einer Windkraftanlage (1).

10. Verfahren zum Verstellen der Position wenigstens eines Rotorblatts (11) einer Windkraftanlage (1) mittels wenigstens eines Elektromotors (31), dem mittels eines Stromrichters (26) ein elektrischer Motorstrom (30) zugeführt wird, der in Abhängigkeit von einem Stromsollwertsignal (24, I_soll) geregelt wird, wobei ein Führungssignal (23, I_f) erzeugt wird, dem in einer ersten Betriebsart das Stromsollwertsignal (24, I_soll) entspricht, **dadurch gekennzeichnet, dass**
- ein gepulstes Signal (I_puls) erzeugt wird, dem in einer zweiten Betriebsart das Stromsollwertsignal (24, I_soll) entspricht, wenn das Führungssignal (I_f) oder dessen Betrag für eine vorgegebene Zeitdauer (t_max) einen vorgegebenen Maximalwert (I_max) überschreitet.

11. Verfahren nach Anspruch 10, **dadurch gekennzeichnet, dass** zur ersten Betriebsart zurückgekehrt wird, wenn das Führungssignal (23, I_f) oder dessen Betrag einen vorgegeben Schwellenwert unterschreitet, der kleiner oder gleich dem Maximalwert (I_max) ist.

12. Verfahren nach Anspruch 10 oder 11, **dadurch gekennzeichnet, dass** die Drehzahl (32) des Elektromotors (31) in der ersten Betriebsart geregelt wird, wobei das Führungssignal (23, I_f) abhängig von der Abweichung zwischen einer Solldrehzahl des Elektromotors (31) und einer Istdrehzahl (32) des Elektromotors (31) ist.

13. Verfahren nach einem der Ansprüche 10 bis 12, **dadurch gekennzeichnet, dass** die Temperatur (T) des Stromrichters (26) gemessen wird, wobei die Signalhöhe (I_dyn) der Impulse des gepulsten Signals (I_puls) variiert wird, wenn die gemessene Temperatur (T) einen vorgegebenen maximalen Temperaturwert (T_max) erreicht oder überschreitet.

14. Verfahren nach einem der Ansprüche 10 bis 13, **dadurch gekennzeichnet, dass** der Elektromotor (31) eine Gleichstrommaschine ist und dem Stromrichter (26) ein mehrphasiger Strom zugeführt wird.

## Claims

1. Electric drive having
at least one electric motor (31), which is or can be supplied with an electric motor current (30) by means of a converter (26),
a current regulator (22), by means of which the motor current (30) is or can be regulated depending on a current-setpoint signal (24, I_soll) while acting upon the converter (26), a current-setpoint generator (20) coupled to the current regulator (22), by means of which generator a control signal (23, I_f) for the current regulator (22) is or can be generated,
the current-setpoint generator (20) being coupled to the current regulator (22) with an additional circuit (21) being interposed, by means of which
- in a first operating mode the control signal (23, I_{_}f) or a signal corresponding to the control signal is or can be supplied to the current regulator (22) as the current-setpoint signal (24, I_soll),
- in a second operating mode a pulsed signal (I_puls) is or can be generated and supplied to the current regulator (22) as the current-setpoint signal (24, I_soll).

2. Electric drive according to Claim 1, **characterised in that** the impulses of the pulsed signal (I_puls) form at least two impulse groups (82, 83) which succeed one another at a time interval (t_refresh) that is greater than the time interval (t_rec) between two successive impulses in the same impulse group.

3. Electric drive according to Claim 1 or 2, **characterised in that** the additional circuit (21) is coupled to a temperature sensor (53), by means of which the temperature (T) of the converter (26) is or can be measured, the signal level (I_dyn) of the impulses of the pulsed signal (I_puls) being or being able to be varied by means of the additional circuit (21) if the measured temperature (T) reaches or exceeds a predetermined maximum temperature (T_max).

4. Electric drive according to one of the preceding claims, **characterised in that** the additional circuit (21) switches or can switch into the second operating mode if the control signal (23, I_f) or the magnitude thereof is greater than or equal to a predetermined maximum value (I_max) for a predetermined time (t_max).

5. Electric drive according to Claim 4, **characterised in that** the additional circuit (21) switches or can switch into the first operating mode if the control signal (23, I_f) or the magnitude thereof falls below a predetermined threshold value that is smaller than or equal to the maximum value.

6. Electric drive according to one of the preceding claims, **characterised in that** the current-setpoint generator (20) is or forms part of a speed regulator, by means of which the speed of the electric motor in the first operating mode is or can be regulated, the control signal (23, I_f) depending on a deviation between a setpoint speed of the electric motor (31) and an actual speed of the electric motor (31).

7. Electric drive according to one of the preceding claims, **characterised in that** the electric motor (31) is a direct current machine and the converter (26) has at least one polyphase thyristor bridge (54), which is or can be provided with a polyphase current on the input side.

8. Wind turbine having
a support (5),
a rotor (8) mounted on the support (5) so as to be rotatable about a rotor axis (9), which rotor has a rotor hub (10) and at least one rotor blade (11) fixed to the rotor hub (10), the position of which relative to the rotor hub (10) is or can be adjusted by means of an adjustment drive (13),
**characterised in that**
the adjustment drive (13) has at least one electric drive (85) according to one of the preceding claims.

9. Use of an electric drive according to one of Claims 1 to 7 for adjusting the position of at least one rotor blade (11) of a wind turbine (1).

10. Method for adjusting the position of at least one rotor blade (11) of a wind turbine (1) by means of at least one electric motor (31), which is supplied with an electric motor current (30) by means of a converter (26), which motor current is regulated depending on a current-setpoint signal (24, I_soll), a control signal (23, I_f) being generated, to which the current-setpoint signal (24, I_soll) corresponds in a first operating mode, **characterised in that**
- a pulsed signal (I_puls) is generated, to which the current-setpoint signal (24, I_soll) corresponds in a second operating mode if the control signal (I_f) or the magnitude thereof exceeds a predetermined maximum value (I_max) for a predetermined time (t_max).

11. Method according to Claim 10, **characterised in that** reversion to the first operating mode occurs if the control signal (23, I_f) or the magnitude thereof falls below a predetermined threshold value that is smaller than or equal to the maximum value (I_max).

12. Method according to Claim 10 or 11, **characterised in that** the speed of the electric motor in the first operating mode is regulated, the control signal (23, I_{_}f) depending on the deviation between a setpoint speed of the electric motor (31) and an actual speed of the electric motor (31).

13. Method according to one of Claims 10 to 12, **characterised in that** the temperature (T) of the converter (26) is measured, the signal level (I_dyn) of the impulses of the pulsed signal (I_puls) being varied if the measured temperature (T) reaches or exceeds a predetermined maximum temperature (T_max).

14. Method according to one of Claims 10 to 13, **characterised in that** the electric motor (31) is a direct current machine and a polyphase current is supplied to the converter (26).

## Revendications

1. Entraînement électrique comprenant :
au moins un moteur électrique (31), auquel est ou peut être acheminé un courant moteur électrique (30) au moyen d'un redresseur de courant (26),
un régulateur de courant (22), au moyen duquel le courant moteur (30) est ou peut être réglé sous l'action du redresseur de courant (26) en fonction d'un signal de valeur de consigne de courant (24, I_cons),
un indicateur de valeur de consigne de courant (20) couplé au régulateur de courant (22), au moyen duquel indicateur un signal de guidage (23, I_f) est ou peut être généré pour le régulateur de courant (22),
dans lequel :
l'indicateur de valeur de consigne de courant (20) est couplé au régulateur de courant (22) par connexion intermédiaire d'un circuit d'appoint (21), au moyen duquel :
- dans un premier mode de fonctionnement, le signal de guidage (23, I_f) ou un signal correspondant au signal de guidage est ou peut être acheminé au régulateur de courant (22) comme signal de valeur de consigne de courant (24, I_cons), et
- dans un second mode de fonctionnement, un signal pulsé (I_puls) est généré et est ou peut être acheminé au régulateur de courant (22) comme signal de valeur de consigne de courant (24, I_cons).

2. Entraînement électrique selon la revendication 1, **caractérisé en ce que** les impulsions du signal pulsé (I_puls) forment au moins deux groupes d'impulsions (82, 83) successifs dans un intervalle de temps (t_refresh), lequel intervalle de temps est plus grand que l'intervalle de temps (t_rec) entre deux impulsions successives du même groupe d'impulsions.

3. Entraînement électrique selon la revendication 1 ou 2, **caractérisé en ce que** le circuit d'appoint (21) est couplé à une sonde de température (53), au moyen de laquelle la température (T) du redresseur de courant (26) est ou peut être mesurée, dans lequel, au moyen du circuit d'appoint (21), la hauteur (I_dyn) des impulsions du signal pulsé (I_puls) est ou peut être modifiée lorsque la température mesurée (T) atteint ou dépasse une valeur de température maximale (T_max) prédéterminée.

4. Entraînement électrique selon l'une quelconque des revendications précédentes, **caractérisé en ce que** le circuit d'appoint (21) se commute ou peut se commuter dans le second mode de fonctionnement, lorsque le signal de guidage (23, I_f) ou son niveau sur une période de temps prédéterminée (t_max) est supérieur ou égal à une valeur maximale (I_max) prédéterminée.

5. Entraînement électrique selon la revendication 4, **caractérisé en ce que** le circuit d'appoint (21) se commute ou peut se commuter dans le premier mode de fonctionnement lorsque le signal de guidage (23, I_f) ou son niveau passe en dessous d'une valeur de seuil prédéterminée, qui est inférieure ou égale à la valeur maximale.

6. Entraînement électrique selon l'une quelconque des revendications précédentes, **caractérisé en ce que** l'indicateur de valeur de consigne de courant (20) fait partie d'un régulateur de nombre de tours ou forme celui-ci, au moyen duquel, dans le premier mode de fonctionnement, le nombre de tours du moteur électrique est ou peut être réglé, dans lequel le signal de guidage (23, I_f) est fonction d'un écart entre un nombre de tours de consigne du moteur électrique (31) et un nombre de tours réel du moteur électrique (31).

7. Entraînement électrique selon l'une quelconque des revendications précédentes, **caractérisé en ce que** le moteur électrique (31) est une machine à courant continu et le redresseur de courant (26) présente au moins un pont de thyristors polyphasé (54), qui est ou peut être alimenté, côté entrée, par un courant polyphasé.

8. Eolienne comprenant :
un support (5),
un rotor (8) monté à rotation sur le support (5) autour d'un arbre de rotor (9), lequel rotor présente un moyeu (10) et au moins une pale de rotor (11) fixée au moyeu (10) du rotor, pale dont la position par rapport au moyeu de rotor (10) est ou peut être réglée au moyen d'un entraînement de réglage (13), **caractérisée en ce que**
l'entraînement de réglage (13) présente au moins un entraînement électrique (85) selon l'une quelconque des revendications précédentes.

9. Utilisation d'un entraînement électrique selon l'une quelconque des revendications 1 à 7 pour le réglage de la position d'au moins une pale de rotor (11) d'une éolienne (1).

10. Procédé de réglage de la position au moins d'une pale de rotor (11) d'une éolienne (1) au moyen d'au moins un moteur électrique (31), auquel est acheminé au moyen d'un redresseur de courant (26) un courant moteur électrique (30), qui est réglé en fonction d'un signal de valeur de consigne de courant (24, I_cons), dans lequel un signal de guidage (23, I_f) est généré, auquel correspond le signal de valeur de consigne de courant (24, I_cons) dans le premier mode de fonctionnement,
**caractérisé en ce que** :
- un signal pulsé (I_puls) est généré, auquel correspond le signal de valeur de consigne de courant (24, I_cons) dans un second mode de fonctionnement, lorsque le signal de guidage (I_f) ou son niveau sur une période de temps prédéterminée (t_max) dépasse une valeur maximale prédéterminée (I_max).

11. Procédé selon la revendication 10, **caractérisé en ce que** l'on revient au premier mode de fonctionnement, lorsque le signal de guidage (23, I_f) ou son niveau passe en dessous d'une valeur de seuil prédéterminée qui est inférieure ou égale à la valeur maximale (I_max).

12. Procédé selon la revendication 10 ou 11, **caractérisé en ce que** le nombre de tours (32) du moteur électrique (31) est réglé dans le premier mode de fonctionnement, dans lequel le signal de guidage (23, I_f) est fonction de l'écart entre un nombre de tours de consigne du moteur électrique (31) et un nombre de tours réel (32) du moteur électrique (31).

13. Procédé selon l'une quelconque des revendications 10 à 12, **caractérisé en ce que** la température (T) du redresseur de courant (26) est mesurée, dans lequel la hauteur (I_dyn) des impulsions du signal pulsé (I_puls) est modifiée, lorsque la température (T) mesurée atteint ou dépasse une valeur de température maximale (T_max) prédéterminée.

14. Procédé selon l'une quelconque des revendications 10 à 13, **caractérisée en ce que** le moteur électrique (31) est une machine à courant continu et un courant polyphasé est acheminé au redresseur de courant (26).
